# EUROPÄISCHE PATENTSCHRIFT

(11) **EP 3 052 827 B1**
(45) Veröffentlichungstag und Bekanntmachung des Hinweises auf die Patenterteilung: **29.11.2017**
(21) Anmeldenummer: 14793009.3
(22) Anmeldetag: 11.09.2014
(51) Int. Cl.: F16D 21/06

(54) **IMPULS-TRENNKUPPLUNGSANORDNUNG**
PULSE-SEPARATION CLUTCH ARRANGEMENT
SYSTÈME D'EMBRAYAGE DE COUPURE À DÉCLIC

(30) Priorität: 04.10.2013 DE 102013220114
(43) Veröffentlichungstag der Anmeldung: 10.08.2016
(73) Patentinhaber: Schaeffler Technologies AG & Co. KG, 91074 Herzogenaurach (DE)
(72) Erfinder: TRINKENSCHUH, Andreas, 77815 Bühl (DE); RUDER, Willi, 77933 Lahr (DE)
(86) Internationale Anmeldenummer: PCT/DE2014/200466
(87) Internationale Veröffentlichungsnummer: WO 2015/048960

(56) Entgegenhaltungen:
- EP-A1- 2 517 915
- US-A1- 2011 240 384
- US-A1- 2011 259 698
- US-A1- 2015 024 903

## Beschreibung

Die vorliegende Erfindung betrifft eine Impuls-Trennkupplungsanordnung für ein Hybridfahrzeug gemäß dem Oberbegriff des Anspruchs 1 sowie ein Verfahren gemäß dem Oberbegriff des Anspruchs 10.

Eine Impuls-Trennkupplungsanordnung wird üblicherweise durch eine Impuls-Trennkupplung, eine Anfahrkupplung und einen Elektromotor gebildet. Die Impuls-Trennkupplungsanordnung ist eingerichtet, zwischen einer Kurbelwelle eines Verbrennungsmotors und einem Getriebe des Hybridfahrzeugs einen Teil eines Antriebsstrangs des Hybridfahrzeugs zu bilden. Die Anfahrkupplung ist dazu vorgesehen, bei Hybridfahrzeugen ein Anfahren zu unterstützen, insbesondere bei Hybridfahrzeugen mit einem Handschaltgetriebe oder einem in irgendeiner Art automatisierten Handschaltgetriebe.

Impuls-Trennkupplungen ermöglichen bei Hybridantrieben mit Elektromotor zum einen die vollständige Trennung des Verbrennungsmotors vom Antriebsstrang (geöffnete Trennkupplung), zum anderen ein Starten des Verbrennungsmotors (geschlossene Trennkupplung), insbesondere ohne Anlasser. Zum Starten des Verbrennungsmotors wird die Impuls-Trennkupplung mit hoher Dynamik geschlossen, zum einen um Schlupf zu vermeiden, zum anderen um die in der Impuls-Trennkupplungsanordnung vorhandene (kinetische) Energie möglichst vollständig zum Starten nutzen zu können. Beim schlagartigen Schließen kann dann auch die Massenträgheit rotierender Komponenten effektiv genutzt werden, um ein zum Starten bzw. Anschleppen des Verbrennungsmotors erforderliches Mindestdrehmoment aufzubringen.

Ein Verbrennungsmotor ruft dabei aufgrund ungleichförmiger Kraftübertragung Momentschwankungen hervor, die durch die Kupplungsanordnung kompensiert werden müssen, insbesondere auch beim Startvorgang des Verbrennungsmotors. Soll die Kraftübertragung schlupffrei erfolgen, sind hohe Anpress- und/oder Ausrückkräfte erforderlich. Die hohen Kräfte bedingen dann entsprechend dimensionierte Bauteile bzw. Versteifungsmaßnahmen und/oder Redundanz von einzelnen Maschinenelementen, insbesondere von den axialen Anpressdruck einstellenden Tellerfedern, um die für eine schlupffreie Übertragung erforderliche Reibkraft an Reibflächen der Impuls-Trennkupplung einstellen zu können.

Neben dem Erfordernis einer Auslegung der einzelnen Maschinenelemente in Hinblick auf die zu übertragenden Kräfte und Drehmomente bestehen häufig strenge Anforderungen in Hinblick auf den axialen Bauraum. Die Impuls-Trennkupplungsanordnung sollte so kompakt wie möglich ausgeführt werden. Die Impuls-Trennkupplung ist dabei üblicherweise innerhalb des Elektromotors angeordnet, was axialen Bauraum einspart, und die Anfahrkupplung ist üblicherweise getriebeseitig vom Elektromotor angeordnet.

Aus jeder der US 2011/0240384 A1, der EP 2 517 915 A1 und der US 2011/0259698 A1 ist jeweils eine Impuls-Trennkupplungsanordndung gemäß dem Oberbegriff des Anspruchs 1 bzw. ein Verfahren zum Vormontieren von dieser gemäß dem Oberbegriff des Anspruchs 10 bekannt.

Es ist eine Aufgabe der vorliegenden Erfindung, eine Impuls-Trennkupplungsanordnung mit einem zweckdienlichen Aufbau bereitzustellen, welche insbesondere eingerichtet ist, hohe Anpress- und/oder Ausrückkräfte zu übertragen.

Diese Aufgabe wird hinsichtlich der Impuls-Trennkupplungsanordnung mit den in Anspruch 1 und hinsichtlich des Verfahrens zum Zusammenbauen von dieser mit den in Anspruch 10 angegebenen Maßnahmen gelöst.

Weitere vorteilhafte Ausgestaltungen der vorliegenden Erfindung sind Gegenstand der abhängigen Ansprüche.

Genauer gesagt wird Diese Aufgabe gelöst durch eine Impuls-Trennkupplungsanordnung für ein Hybridfahrzeug, die zwischen einem Verbrennungsmotor und einem Getriebe, insbesondere Handschaltgetriebe des Hybridfahrzeugs anordenbar ist, mit
- einer Impuls-Trennkupplung, die zum Kuppeln und Entkuppeln des Verbrennungsmotors von einem Elektromotor der Impuls-Trennkupplungsanordnung und/oder zum Starten des Verbrennungsmotors eingerichtet ist;
- einer Anfahrkupplung, die mit dem Getriebe verbindbar ist;
- dem Elektromotor;
wobei die Impuls-Trennkupplung eine Kupplungsscheibe aufweist, die verbrennungsmotorseitig (in Bezug auf eine axiale Richtung) axial neben dem Elektromotor angeordnet ist.

Durch diese Anordnung der Impuls-Trennkupplung können mit einem verhältnismäßig schlanken konstruktivem Aufbau hohe Anpress- und/oder Ausrückkräfte übertragen werden. Dabei können die erforderlichen axialen Kräfte reduziert werden, denn bei vorgegebenem Reibwert zwischen den aneinander reibenden Komponenten der Trennkupplung kann bei größerem Durchmesser und vorgegebener axialer Anpresskraft ein größeres Drehmoment übertragen werden. Hierdurch kann auf eine zweite Tellerfeder verzichtet werden und/oder die Komponenten können schlanker ausgelegt und konstruiert werden, insbesondere im Hinblick auf deren Biegesteifigkeit und Stabilität bezüglich axialer Kräfte. Durch die schlankere Konstruktion einzelner Komponenten kann auch axialer Bauraum eingespart werden.

Als eine Anordnung neben dem Elektromotor ist bevorzugt eine Anordnung neben einem Rotor und wahlweise zusätzlich auch neben einem Stator des Elektromotors zu verstehen. Der Rotor, insbesondere der elektrotechnische Teil, bevorzugt die Wicklungen, des Rotors weist dabei verbrennungsmotorseitig eine axiale Begrenzungsebene auf, neben welcher die Kupplungsscheibe angeordnet werden kann.

Eine Anordnung neben dem Elektromotor kann dabei auch eine Anordnung in einem gewissen axialen Abstand zum Elektromotor umfassen. Die Kupplungsscheibe kann innerhalb einer Art Gehäuse oder eines Deckels angeordnet sein, das/der angrenzend zum Rotor angeordnet ist. Die Kupplungsscheibe ist auf der zum Verbrennungsmotor gewandten Seite des Elektromotors angeordnet.

Im Gegensatz dazu besteht bei einer innerhalb vom Elektromotor angeordneten Impuls-Trennkupplung der Nachteil, dass die Kräfte nur auf einem relativ kleinen, maximalen Reibradius übertragen werden können. Die Kupplungsscheibe kann dann nur mit einem kleinen, maximalen Durchmesser ausgeführt werden, welcher kleiner sein muss als der Innendurchmesser eines Rotors des Elektromotors. Bei derartiger Anordnung ist die Anfahrkupplung üblicherweise getriebeseitig vom Elektromotor neben dem Elektromotor angeordnet. Zwar kann die Anfahrkupplung dann mit einem größeren Durchmesser als der Elektromotor ausgeführt sein. Es hat sich jedoch gezeigt, dass der große Durchmesser einer Anfahrkupplung weniger vorteilhaft ist als bei einer Impuls-Trennkupplung.

Bevorzugt ist die Impuls-Trennkupplung verbrennungsmotorseitig von der Anfahrkupplung angeordnet. Die Anfahrkupplung kann dabei innerhalb vom Elektromotor angeordnet sein und axialen Bauraum nur innerhalb vom Elektromotor beanspruchen, also keinen weiteren axialen Bauraum neben dem Elektromotor. Mit anderen Worten kann der axiale Bauraum, welcher innerhalb eines Elektromotors vorliegt, von der Anfahrkupplung genutzt werden. Die Anfahrkupplung ist insbesondere für ein reines Handschaltergetriebe und/oder ein automatisiertes Handschaltergetriebe vorgesehen. Das Handschaltgetriebe kann also auch als ein irgendwie teilautomatisiertes Handschaltgetriebe ausgebildet sein.

Bevorzugt sind auch eine Gegenplatte, eine Anpressplatte, eine Tellerfeder und/oder ein diese Komponenten umrahmender Deckel der Impuls-Trennkupplung verbrennungsmotorseitig neben dem Elektromotor angeordnet. Weiter bevorzugt sind zumindest alle ein Drehmoment übertragenden Komponenten der Impuls-Trennkupplung verbrennungsmotorseitig neben dem Elektromotor angeordnet. Hierdurch kann ein Reibradius der Impuls-Trennkupplung ganz unabhängig von der radialen Erstreckung des Elektromotors gewählt werden.

Als verbrennungsmotorseitige Anordnung ist dabei eine Anordnung auf einer Seite zu verstehen, welche zum Verbrennungsmotor des Hybridfahrzeugs weist. Als getriebeseitige Anordnung ist dabei eine Anordnung auf einer Seite zu verstehen, welche zum Getriebe des Hybridfahrzeugs weist.

Gemäß einem Ausführungsbeispiel ist die Kupplungsscheibe der Impuls-Trennkupplung radial (in Bezug auf eine radiale Erstreckung) überlappend zum Elektromotor angeordnet. Hierdurch kann der Reibradius deutlich größer als ein Radius eines Rotors des Elektromotors gewählt werden. Als Reibradius ist dabei ein Radius bzw. ein Bereich für einen Radius zu verstehen, den eine Reibfläche der Kupplungsscheibe der Impuls-Trennkupplung aufweist bzw. einnimmt. Der Reibradius liegt dabei z.B. im Bereich eines Faktors größer 1 eines Innenradius des Rotors. Im Gegensatz dazu kann bei einer Anordnung der Impuls-Trennkupplung innerhalb vom Elektromotor der Reibradius nur im Bereich eines Faktors kleiner 1 des Innenradius des Rotors liegen.

Bevorzugt ist der Durchmesser der Kupplungsscheibe der Impuls-Trennkupplung größer als der Durchmesser eines Rotors des Elektromotors. Gemäß einer Variante liegt der Durchmesser der Kupplungsscheibe der Impuls-Trennkupplung im Bereich vom Durchmesser des Stators des Elektromotors.

Bevorzugt weist die Impuls-Trennkupplung eine Tellerfeder auf, die verbrennungsmotorseitig neben dem Elektromotor angeordnet ist und einen Durchmesser größer als der Durchmesser des Rotors des Elektromotors aufweist. Gemäß einer Variante weist die Impuls-Trennkupplung dabei nur eine einzige Tellerfeder auf.

Gemäß einem Ausführungsbeispiel weist die Impuls-Trennkupplungsanordnung ein Stützlager auf, wobei die Kupplungsscheibe mittels des Stützlagers, insbesondere eines Innenrings des Stützlagers, drehfest mit einer Kurbelwelle des Hybridfahrzeugs verbindbar ist, insbesondere mittels eines Kurbelwellenadapters. Hierdurch kann eine vergleichsweise direkte Anbindung der Impuls-Trennkupplung mit der Kurbelwelle bzw. dem Verbrennungsmotor erfolgen, und zwar ohne konstruktive Schwierigkeiten. Die Kupplungsscheibe kann radial außen von der Kurbelwelle angeordnet sein und über einen Träger mit der Kurbelwelle verbunden sein, welcher als eine Scheibe und damit als ein Standard-Maschinenelement ausgebildet sein kann. Das Stützlager ist dabei zum Lagern der Anfahrkupplung sowie zum Lagern des Elektromotors und der Impuls-Trennkupplung eingerichtet. Durch das Stützlager kann eine Differenzdrehzahl zwischen der Kupplungsscheibe der Impuls-Trennkupplung und dem Elektromotor bzw. der Anfahrkupplung ermöglicht werden.

Gemäß einem Ausführungsbeispiel weist die Impuls-Trennkupplungsanordnung einen Kurbelwellenadapter auf, welcher mit dem Stützlager verbindbar ist. Der Kurbelwellenadapter ermöglicht eine besonders einfache Montage und kann einen Aufbau der Impuls-Trennkupplungsanordnung sicherstellen, welcher wenig axialen Bauraum erfordert. Bevorzugt liegt der Kurbelwellenadapter stirnseitig an einem Innenring des Stützlagers an.

Gemäß einer vorteilhaften Variante ist der Kurbelwellenadapter zumindest teilweise verbrennungsmotorseitig innerhalb vom Innenring angeordnet. Dabei kann der Innenring einen Absatz und eine dadurch definierte Innenmantelfläche aufweisen, an welcher der Kurbelwellenadapter mit einer korrespondierenden Außenmantelfläche zur Anlage kommen und wahlweise auch zentriert werden kann. Hierdurch kann eine überlappende Anordnung bereitgestellt werden, bei welcher der Kurbelwellenadapter in axialer Richtung nicht weiter von der Impuls-Trennkupplungsanordnung hervorsteht als die Impuls-Trennkupplung.

Bevorzugt ist das Stützlager dazu eingerichtet, sowohl die Anfahrkupplung als auch die Impuls-Trennkupplung und den Elektromotor zu lagern und mit der Kurbelwelle zu kuppeln, insbesondere mittels des Kurbelwellenadapters. Hierdurch kann eine Anbindung zum Verbrennungsmotor allein über eine einzige Schnittstelle zwischen dem Stützlager und der Kurbelwelle erfolgen. Eine weitere Trennstelle, insbesondere zwischen der Impuls-Trennkupplung und der Anfahrkupplung, ist nicht erforderlich. Dies erleichtert den Zusammenbau oder auch die Montage.

Gemäß einem Ausführungsbeispiel weist das Stützlager einen Innenring auf, welcher einen Flansch mit einer stirnseitigen formschlüssigen Schnittstelle aufweist. Bei einer stirnseitigen, formschlüssigen Schnittstelle kann die Montage auf einfache Weise durch Aufeinanderschieben erfolgen. Gleichzeitig ermöglicht die stirnseitige Schnittstelle eine große Übertragungsfläche, ohne dass der Innenring den Kurbelwellenadapter in axialer Richtung weit überlappen muss. Hierdurch kann der Bedarf an axialem Bauraum klein gehalten werden. Als Flansch ist dabei ein Maschinenelement oder ein Teil eines Maschinenelements zu verstehen, welches ein reversibles Verbinden von zwei Maschinenelementen ermöglicht. Bevorzugt weist der Innenring eine stirnseitige Verzahnung auf, die eingerichtet ist, eine drehfeste Verbindung mit dem Kurbelwellenadapter sicherzustellen. Bevorzugt weist der Kurbelwellenadapter eine korrespondierende stirnseitige Verzahnung auf.

Gemäß einem Ausführungsbeispiel weist der Elektromotor einen Rotorträger auf, welcher die Anfahrkupplung radial außen umgrenzt und dazu eingerichtet ist, die Anfahrkupplung mit der Impuls-Trennkupplung zu verbinden. Hierdurch kann eine (einzige) Schnittstelle bereitgestellt werden, an welcher die Impuls-Trennkupplung, die Anfahrkupplung und der Rotor miteinander verbunden werden können. Eine Anbindung dieser drei Komponenten ans Stützlager kann dann in einem zweiten Schritt insbesondere über eine Gegenplatte der Anfahrkupplung erfolgen. Die Gegenplatte ist eingerichtet, alle drei rotierenden Hauptkomponenten, nämlich die Impuls-Trennkupplung, die Anfahrkupplung und den Rotor des Elektromotors, auf der Kurbelwelle abzustützen. Bevorzugt ist die Gegenplatte als Scheibe ausgebildet, die sich im Wesentlichen in radialer Richtung nach außen vom Innenring aus erstreckt.

Ein die Anfahrkupplung umgrenzender Rotorträger kann auf Anfahrkupplung in einem vom Rotorträger gebildeten Innenvolumen aufnehmen. Der Rotorträger umgibt die Anfahrkupplung radial außen. Bevorzugt ist die Anfahrkupplung vollständig innerhalb vom Rotorträger angeordnet, sowohl in Bezug auf die radiale Erstreckung als auch in Bezug auf die axiale Erstreckung.

Bevorzugt erstreckt sich der Rotorträger verbrennungsmotorseitig der Anfahrkupplung in radialer Richtung und bildet im radialen Abschnitt einen Flansch, der für ein Verbinden mit der Gegenplatte der Anfahrkupplung und einem Deckel der Impuls-Trennkupplung eingerichtet ist. Dabei überlappt der radiale Abschnitt des Rotorträgers die Anfahrkupplung in radialer Richtung.

Bevorzugt weist die Anfahrkupplung einen Deckel auf, welcher formschlüssig und verdrehsicher in den Rotorträger eingreift, insbesondere in korrespondierende Aussparungen im Rotorträger. Der Deckel kann seitens des Getriebes in den Rotorträger eingeschoben werden. Der Deckel und damit auch die Anfahrkupplung können dabei z.B. mittels eines Sicherungsrings in axialer Richtung im Rotorträger gesichert werden.

Gemäß einem Ausführungsbeispiel weist die Impuls-Trennkupplung einen Zuganker auf, welcher sich axial, also in axialer Richtung, innerhalb der Impuls-Trennkupplung sowie innerhalb der Anfahrkupplung erstreckt. Mit anderen Worten erstreckt sich der Zuganker teilweise durch die Impuls-Trennkupplung und (bevorzugt vollständig) durch die Anfahrkupplung, insbesondere von der Impuls-Trennkupplung bis zu einem getriebeseitigen Ende der Anfahrkupplung und wahlweise auch darüber hinaus. Insbesondere ist der Zuganker durch eine Anpressplatte und einen Deckel der Impuls-Trennkupplung hindurch geführt. Hierdurch kann die Anpressplatte der Impuls-Trennkupplung auf einfache Weise mit einem getriebeseitig der Anfahrkupplung angeordneten Ausrücklager gekoppelt werden. Die Anpressplatte und der Deckel weisen hierzu Aussparungen bzw. Löcher auf, die so dimensioniert und angeordnet sind, dass der Zuganker berührungslos durch die Anpressplatte und den Deckel geführt werden kann. Bevorzugt sind die Aussparungen fluchtend angeordnet.

Bevorzugt erstreckt sich der Zuganker in axialer Richtung entlang der gesamten axialen Breite der Anfahrkupplung und weist einen Rand auf, welcher einen Hebel bzw. eine Hebelfeder der Impuls-Trennkupplung hintergreift, wobei die Hebelfeder getriebeseitig von der Anfahrkupplung angeordnet ist.

Bevorzugt ist der Zuganker verbrennungsmotorseitig vom Elektromotor in einer Position außerhalb vom Elektromotor mit der Anpressplatte der Impuls-Trennkupplung verbunden. Dies ermöglicht eine direkte Verbindung des Zugankers mit der Anpressplatte.

Bevorzugt ist der Zuganker auch durch den Rotorträger des Elektromotors und/oder die Gegenplatte der Anfahrkupplung hindurch geführt. Der Rotorträger und/oder die Gegenplatte weisen hierzu Aussparungen bzw. Löcher auf, die so dimensioniert und angeordnet sind, dass der Zuganker berührungslos durch den Rotorträger und/oder die Gegenplatte geführt werden kann. Bevorzugt sind die Aussparungen fluchtend angeordnet.

Gemäß einem Ausführungsbeispiel weist die Impuls-Trennkupplung einen Deckel auf, welcher verbrennungsmotorseitig neben dem Elektromotor, insbesondere neben einem Rotor des Elektromotors, mit einem Rotorträger des Elektromotors und/oder einer Gegenplatte der Anfahrkupplung verbunden, insbesondere vernietet ist. Hierdurch kann der Deckel mit einem Durchmesser ausgeführt sein, der unabhängig vom Durchmesser des Rotors des Elektromotors gewählt werden kann. Der Deckel kann in radialer Richtung größer sein als die aneinander reibenden Komponenten der Impuls-Trennkupplung und kann diese Komponenten umgreifen. Bevorzugt umgreift bzw. umrahmt der Deckel die Tellerfeder, die Anpressplatte die Kupplungsscheibe und die Gegenplatte der Impuls-Kupplungsanordnung.

Bevorzugt ist der Deckel verbrennungsmotorseitig vom Rotorträger angeordnet, und die Gegenplatte der Anfahrkupplung ist getriebeseitig vom Rotorträger angeordnet.

Bevorzugt umgreift der Deckel die Kupplungsscheibe der Impuls-Trennkupplung und ist mit einer Gegenplatte verbunden, die verbrennungsmotorseitig von der Kupplungsscheibe angeordnet ist.

Gemäß einem Ausführungsbeispiel weist die Impuls-Trennkupplung einen Deckel auf, welcher mit einer Gegenplatte der Anfahrkupplung an einer Schnittstelle verbunden ist, insbesondere verstiftet, vernietet oder mittels eines Sicherungsrings gesichert ist, die in einem Abstand zu einer Symmetrieachse der Impuls-Trennkupplungsanordnung angeordnet ist, der größer ist als ein Abstand eines Rotors des Elektromotor zur Symmetrieachse. Mit anderen Worten ist eine Schnittstelle zwischen der Gegenplatte und dem Deckel radial weiter außen angeordnet als der Rotor. Hierdurch kann ein zwischen der Gegenplatte und dem Deckel zu übertragendes Drehmoment an einer Schnittstelle mit einem großen Radius übertragen werden. Sie Symmetrieachse entspricht dabei bevorzugt einer Mittenlängsachse der Impuls-Trennkupplungsanordnung. Die Schnittstelle kann dabei in Bezug auf das zu übertragende Drehmoment vergleichsweise schlank oder gewichtsoptimiert ausgebildet sein. Bei einer in einem großen radialen Abstand vorgesehenen Schnittstelle ist zum einen die zur Verfügung stehende Fläche groß, zum anderen sind die Umfangskräfte in Bezug auf ein bestimmtes Drehmoment klein. Dies ermöglicht einen schlanken Aufbau der einzelnen Komponenten. Durch diese Anordnung der Schnittstelle ist es z.B. möglich, eine formschlüssige Verbindung zwischen dem Deckel und der Gegenplatte zu wählen, die auch eine Demontage und einen Austausch der Kupplungsscheibe ermöglicht. Die Gegenplatte kann beispielsweise mit dem Deckel verschraubt sein, oder die Gegenplatte kann radial formschlüssig in den Deckel eingreifen und in axialer Richtung mittels eines Sicherungsrings gesichert sein. Es ist sowohl eine radiale als auch eine axiale Verschraubung möglich, insbesondere auch durch eine Bajonettausführung in der Gegenplatte der Impulstrennkupplung und dem Deckel.

Zur Lösung der zuvor genannten Aufgabe ist erfindungsgemäß auch ein Verfahren zum Zusammenbauen einer Impuls-Trennkupplungsanordnung für ein Hybridfahrzeug vorgesehen, mit den Schritten:
a) Einbauen einer Anfahrkupplung der Impuls-Trennkupplungsanordnung in einem innerhalb eines Elektromotors der Impuls-Trennkupplungsanordnung bereitgestellten Bauraumvolumen; und
b) Vormontieren der Impuls-Trennkupplungsanordnung, indem eine Impuls-Trennkupplung der Impuls-Trennkupplungsanordnung verbrennungsmotorseitig neben dem Elektromotor angeordnet und mit dem Elektromotor verbunden wird. Hierdurch kann auf einfache Weise eine vormontierte Impuls-Trennkupplungsanordnung bereitgestellt werden, welche mittels eines Stützlagers an einer einzigen Schnittstelle mit einer Kurbelwelle verbindbar ist.

Der Schritt a) kann erfolgen, indem ein Deckel der Anfahrkupplung in axialer Richtung in einen Rotorträger des Elektromotors eingeschoben wird, wobei der Deckel bevorzugt formschlüssig (insbesondere über eine Außenverzahnung) verdrehsicher in den Rotorträger eingreift. Der Deckel kann durch axiales Einschieben eines Sicherungsrings in den Rotorträger im Rotorträger gesichert werden.

Der Schritt b) kann erfolgen, indem die Impuls-Trennkupplung, die Anfahrkupplung und der Elektromotor an einem Rotorträger des Elektromotors miteinander verbunden werden. Bevorzugt wird ein Deckel der Impuls-Trennkupplung stirnseitig in axialer Richtung mit einem Rotorträger des Elektromotors verbunden. Weiter bevorzugt wird eine Gegenplatte der Anfahrkupplung mit dem Rotorträger verbunden, insbesondere an einem sich radial erstreckenden Teil bzw. Abschnitt des Rotorträgers. Dabei kann der Rotorträger axial zwischen dem Deckel und der Gegenplatte angeordnet werden.

Das erfindungsgemäße Verfahren kann durch die folgenden Schritte weitergebildet sein:
c) Verbinden eines Kurbelwellenadapters mit einer Kurbelwelle des Hybridfahrzeugs;
d) Verbinden der vormontierten Impuls-Trennkupplungsanordnung mit einem Stützlager, insbesondere indem eine Gegenplatte der Anfahrkupplung am Stützlager, bevorzugt an einem Außenring des Stützlagers, gelagert wird;
e) Verbinden des Stützlagers der Impuls-Trennkupplungsanordnung mit dem Kurbelwellenadapter; und
f) Sichern der Impuls-Trennkupplungsanordnung am Kurbelwellenadapter und damit auch an der Kurbelwelle, insbesondere mittels einer einzelnen axial und zentrisch in den Kurbelwellenadapter eingeschraubten Fixierschraube.

Bei diesem Verfahren kann das Zusammenbauen bzw. die Montage dadurch vereinfacht werden, dass alle Hauptkomponenten der Impuls-Trennkupplungsanordnung vormontiert werden. Die Impuls-Trennkupplung, die Anfahrkupplung und der Elektromotor können miteinander verbunden werden, insbesondere in einer einzigen Schnittstelle (bevorzugt einem Rotorträger des Elektromotors), und am Stützlager gelagert werden. Hierzu weist die Anfahrkupplung bevorzugt eine Gegenplatte auf, die aufgrund ihrer Festigkeit und Biegesteifigkeit eingerichtet ist, alle drei rotierenden Hauptkomponenten, nämlich die Impuls-Trennkupplung, die Anfahrkupplung und den Rotor des Elektromotors, auf der Kurbelwelle abzustützen.

Der Schritt b) kann dabei einen Schritt beinhalten, in welchem der Rotorträger teilweise zwischen einem Deckel der Impuls-Trennkupplung und einer Gegenplatte der Anfahrkupplung angeordnet wird, wobei diese drei Komponenten dann in axialer Richtung miteinander verbunden werden, insbesondere vernietet oder verschraubt. Wahlweise können dabei auch Blattfedern der Impuls-Trennkupplung mit dem Deckel verbunden werden.

Beim Schritt e) kann eine Montage der Impuls-Trennkupplungsanordnung in einem einzigen Montageschritt an der Kurbelwelle erfolgen.

In den nachfolgenden Zeichnungsfiguren wird die Erfindung näher erläutert. Dabei zeigen
- Figur 1: eine Schnittansicht einer Impuls-Trennkupplungsanordnung gemäß einem Ausführungsbeispiel der Erfindung;
- Figur 2a: eine Detailansicht einer Anbindung eines Deckels an eine Gegenplatte einer Impuls-Trennkupplung bei einer Impuls-Trennkupplungsanordnung gemäß einem Ausführungsbeispiel der Erfindung;
- Figur 2b: eine Detailansicht einer alternativen Anbindung eines Deckels an eine Gegenplatte einer Impuls-Trennkupplung bei einer Impuls-Trennkupplungsanordnung gemäß einem Ausführungsbeispiel der Erfindung; und
- Figur 2c: eine Detailansicht einer weiteren Anbindungsmöglichkeit eines Deckels an eine Gegenplatte einer Impuls-Trennkupplung bei einer Impuls-Trennkupplungsanordnung gemäß einem Ausführungsbeispiel der Erfindung.

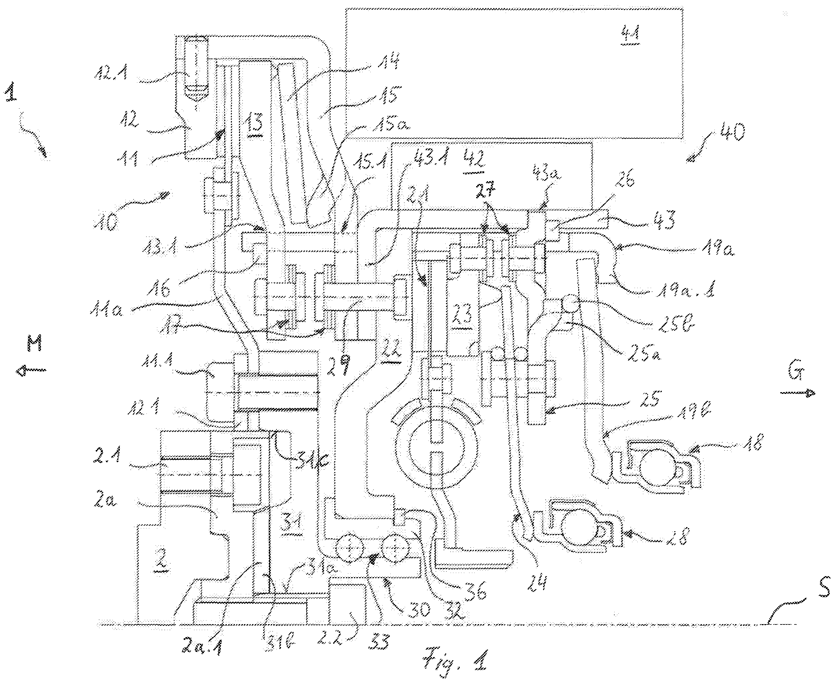

In der Figur 1 ist eine Impuls-Trennkupplungsanordnung 1 gezeigt, welche eine Impuls-Trennkupplung 10, eine Anfahrkupplung 20, ein Stützlager 30 und einen Elektromotor 40 aufweist. Die Impuls-Trennkupplung 10 ist verbrennungsmotorseitig M vom Elektromotor 40 angeordnet und überlappt den Elektromotor 40 in radialer Richtung. Die Anfahrkupplung 20 hingegen ist innerhalb vom Elektromotor 40 angeordnet und überlappt den Elektromotor 40 in axialer Richtung. Seitens einer Motorseite M (motorseitig) wird über eine Kurbelwelle 2 ein Drehmoment auf einen mittels Kurbelwellenschrauben 2.1 mit der Kurbelwelle 2 verbundenen Kurbelwellenadapter 2a übertragen, welcher über eine stirnseitige formschlüssige Schnittstelle, insbesondere eine Hirth-Verzahnung 2a.1, und eine Fixierschraube 2.2 mit dem Kurbelwellenadapter 2a verbunden ist. Das Drehmoment wird innerhalb der Impuls-Trennkupplungsanordnung 1 auf die Anfahrkupplung 20 übertragen, welche auf einer Getriebeseite G (getriebeseitig) der Impuls-Trennkupplung 10 angeordnet ist. Die Impuls-Trennkupplungsanordnung 1 erstreckt sich um eine Symmetrieachse S.

Die Impuls-Trennkupplung 10 weist eine Kupplungsscheibe 11 auf, welche zwischen einer Gegenplatte 12 und einer Anpressplatte 13 angeordnet ist. Die Anpressplatte 13 wirkt mit einer Tellerfeder 14 zusammen, welche in einem Deckel 15 angeordnet ist, wobei der Deckel 15 eine Abstützung 15a für die Tellerfeder 14 aufweist. Wahlweise kann die Abstützung 15a auch durch einen in den Deckel 15 integrierten Drahtring (nicht dargestellt) gebildet sein. Der Deckel 15 ist drehfest mit der Gegenplatte 12 verbunden, insbesondere gemäß der dargestellten Variante über radial angeordnete Stifte 12.1, welche durch den Deckel 15 in die Gegenplatte 12 gesteckt sind. Die Verbindung zwischen Deckel 15 und Gegenplatte 12 weist auch in axialer Richtung eine hohe Festigkeit auf, um Anpresskräfte in den Deckel 15 einleiten zu können. Hierzu können die Stifte 12.1 einen bedeutenden Durchmesser aufweisen, insbesondere einen Durchmesser vergleichbar zur Wandstärke des Deckels 15 (wie dargestellt). Die Anpressplatte 13 ist mittels Blattfedern 17, die als Zugfedern ausgeführt sind, drehfest mit dem Deckel 15 verbunden, wobei die Blattfedern 17 jeweils mit einem Ende an der Anpressplatte 13 und mit dem anderen Ende am Deckel 15 vernietet sind. Die Bewegung bzw. Position der Anpressplatte 13 ist über einen Zuganker 19a und einen Hebel bzw. eine Hebelfeder 19b mit einem Ausrücklager 18 gekoppelt. Der Zuganker 19a weist hierzu einen Rand 19a.1 auf, welcher die Hebelfeder 19b getriebeseitig umgreift. Der Zuganker 19a ist durch eine bzw. mehrere Aussparungen 15.1 im Deckel 15 sowie durch eine bzw. mehrere Aussparungen 13.1 in der Anpressplatte 13 geführt. Der Zuganker 19a ist mittels eines verbrennungsmotorseitig von der Anpressplatte 13 in einer Nut im Zuganker 19a angeordneten Sicherungsrings 16 in Wirkverbindung mit der Anpressplatte 13.

Die Anfahrkupplung 20 weist eine Kupplungsscheibe 21 auf, welche zwischen einer Gegenplatte 22 und einer Anpressplatte 23 angeordnet ist. Die Anpressplatte 23 wirkt mit einer Tellerfeder 24 zusammen, welche mit einem Ausrücklager 28 zusammenwirkt und in einem Deckel 25 abgestützt ist. Der Deckel 25 weist hierzu verbrennungsmotorseitig eine Abstützung auf, die (wie dargestellt) durch am Deckel 25 befestigte Bolzen in Verbindung mit Drahtringen bereitgestellt werden kann. Der Deckel 25 ist mittels Blattfedern 27 mit der Anpressplatte 23 verbunden. Der Deckel 25 weist getriebeseitig eine Abstützung 25a für den Hebel bzw. die Hebelfeder 19b der Impuls-Trennkupplung 10 auf, wobei eine Abstützung alternativ oder zusätzlich auch durch einen am Deckel 25 vorgesehenen Drahtring 25b bereitgestellt werden kann. Über die Dicke des Drahtrings 25b kann dabei auf einfache Weise je nach Anforderungen bei spezifischen Anwendungen ein bestimmtes Kupplungsverhalten eingestellt werden. Die Abstützung 25a erstreckt sich dabei getriebeseitig G in axialer Richtung. Der Zuganker 19a ist teilweise innerhalb der Anfahrkupplung 20 angeordnet. Die Anfahrkupplung 20 kann dabei sowohl mit als auch ohne Verschleißnachstellung ausgeführt sein.

Das Stützlager 30 weist einen Innenring 31 auf, auf welchem die Gegenplatte 22 der Anfahrkupplung 20 gelagert ist, wobei die Gegenplatte 22 an einem Außenring 32 zentriert und befestigt ist und mittels eines darin angeordneten Sicherungsrings 36 in axialer Richtung gesichert ist. Der Innenring 31 und der Außenring 32 sind Teil eines Wälzlagers 33, insbesondere eines Doppelkugellagers. Wahlweise kann das Lager 33 auch mit anderen Wälzkörpern ausgeführt sein. Bevorzugt wird ein doppelreihiges Lager eingesetzt, insbesondere da hiermit ein Verkippen eines Rotors des Elektromotors 40 zusammen mit der Anfahrkupplung 20 und der Impuls-Trennkupplung 10 relativ zu einem Stator des Elektromotors 40 verhindert oder zumindest vermindert werden kann. Das Stützlager 30 lagert die Impuls-Trennkupplung 10 (abgesehen von der Trennscheibe 11), die Anfahrkupplung 20 und den Elektromotor 40 (abgesehen vom Stator 41) auf dem Außenring 32. Die Gegenplatte 22 der Anfahrkupplung 20 und ein Träger 11a der Kupplungsscheibe 11 der Impuls-Trennkupplung 10 sind relativ zueinander verdrehbar am Stützlager 30 gelagert. Der Innenring 31 weist eine Auflagefläche 31a für die zuvor beschriebene Fixierschraube 2.2 auf. Der Innenring 31 weist ferner eine verbrennungsmotorseitig M vorgesehene, stirnseitige formschlüssige Schnittstelle 31b auf, insbesondere eine Hirth-Verzahnung, welche mit der entsprechenden Schnittstelle 2a.1 des Kurbelwellenadapters 2a korrespondiert. Der Innenring 31 weist einen Absatz und eine dadurch definierte Innenmantelfläche 31c auf, an welcher der Kurbelwellenadapter 2a mit einer korrespondierenden Außenmantelfläche zur Anlage kommen und wahlweise auch zentriert werden kann. Der Innenring 31 bildet einen Flansch bzw. weist einen Flansch auf, welcher eingerichtet ist, stirnseitig und formschlüssig mit dem Kurbelwellenadapter 2a verbunden zu werden.

Der Innenring 31 ist mittels Schrauben 11.1 und Unterlegscheiben 11.2 drehfest mit dem Träger 11a der Kupplungsscheibe 11 verbunden.

Der Elektromotor 40 weist einen Stator 41 und einen darin angeordneten Rotor 42 auf, welcher auf einem Rotorträger 43 befestigt ist. Im Rotorträger 43 ist eine Aussparung 43a bzw. sind Aussparungen 43a vorgesehen, in welche der Deckel 25 eingreift, so dass der Rotorträger 43 und der Deckel 25 drehfest miteinander verbunden sind. Die Montage des Deckels 25 erfolgt dabei getriebeseitig, indem der Deckel 25 in den Aussparungen 43a bis zu einem Anschlag des Rotorträgers 43 geschoben wird. Dabei kann mittels des Rotorträgers 43 eine Zentrierung des Deckels 25 erfolgen. Ein Sicherungsring 26 ist in einer Nut im Rotorträger 43 getriebeseitig vom Deckel 25 angeordnet und sichert den Deckel 25 gegen eine axiale Verlagerung in Getrieberichtung G. Der Rotorträger 43 weist einen sich radial erstreckenden Teil bzw. Abschnitt 43.1 auf, welcher zwischen dem Deckel 15 der Impuls-Trennkupplung 10 und der Gegenplatte 22 der Anfahrkupplung 20 angeordnet ist und die Gegenplatte 22 in radialer Richtung überlappt. Ein bzw. mehrere Verbindungsniete 29 stellen eine drehfeste und in axialer Richtung gesicherte Verbindung dieser Komponenten relativ zueinander sicher. Dadurch kann an einer einzigen Schnittstelle eine Verbindung aller drei Hauptkomponenten der Impuls-Trennkupplungsanordnung 1 erfolgen, was das Zusammenbauen oder die Montage erleichtert. Die Verbindungsniete 29 können auch als Schrauben oder eine andere Art formschlüssige Verbindung ausgeführt sein. Die Blattfedern 17 sind mittels der Verbindungsniete 29 am Deckel 15 fixiert. Strenggenommen verbinden die Verbindungsniete 29 damit sogar vier Maschinenelemente miteinander. Der Zuganker 19a erstreckt sich innerhalb vom Rotor 42 und innerhalb vom Rotorträger 43. Die Blattfedern 27 der Anfahrkupplung, 20 sind innerhalb vom Rotor 42 angeordnet.

In einem geöffneten Zustand der Impuls-Trennkupplung 10 ist die Kupplungsscheibe 11 sowohl in einem Abstand zur Gegenplatte 12 als auch in einem Abstand zur Anpressplatte 13 angeordnet, so dass berührungslose Relativbewegungen möglich sind und keine Schleppmomente hervorgerufen werden.

Um einen Verbrennungsmotor von einem Antriebsstrang zu trennen, kann die Anpressplatte 13 mittels des Zugankers 19a entgegen der Kraft der Tellerfeder 14 in Getrieberichtung G gezogen werden. Dies kann dadurch erfolgen, dass das Ausrücklager 18 in Motorrichtung M verlagert wird, so dass die Hebelfeder 19b in Getrieberichtung G auf den Rand 19a.1 wirkt, wobei sich die Hebelfeder 19b an der Abstützung 25a bzw. dem Drahtring 25b abstützt. Über die radiale Anordnung der Abstützung 25a kann die Größe des Hebels eingestellt werden.

Durch die Anordnung der Impuls-Trennkupplung 10 verbrennungsmotorseitig M vom Elektromotor 40 kann eine in axialer Richtung kompakte Impuls-Trennkupplungsanordnung 1 bereitgestellt werden, mit welcher ein großes Drehmoment, insbesondere zum Starten des Verbrennungsmotors, erzeugt werden kann, ohne dass die einzelnen Komponenten besonders massiv oder überdimensioniert werden müssen. Die aufzubringenden Axialkräfte, um eine bestimmte Reibkraft innerhalb der Impuls-Trennkupplung 10 hervorrufen zu können, sind vergleichsweise klein.

Die Montage der Impuls-Trennkupplungsanordnung 1 kann dabei wie im Folgenden näher erläutert erfolgen. Zunächst wird der Kurbelwellenadapter 2a mit dem Ende der Kurbelwelle 2 verschraubt. Daraufhin wird der Innenring 31 des Stützlagers 30 stirnseitig mit der formschlüssigen Schnittstelle 31b an der entsprechenden formschlüssigen Schnittstelle 2a.1 des Kurbelwellenadapters 2a verdrehsicher zur Anlage gebracht. Dabei ist die gesamte Impuls-Trennkupplungsanordnung 1 bereits vormontiert, d.h., die Impuls-Trennkupplung 10, die Anfahrkupplung 20 und der Elektromotor 40 sind bereits mit dem Stützlager 30 verbunden. Bevorzugt wurden der Deckel 15 der Impuls-Trennkupplung 10, die Gegenplatte 22 der Anfahrkupplung 20 und der Rotorträger 43 des Elektromotors 40 dazu am sich radial erstreckenden Teil bzw. Abschnitt 43.1 des Rotorträgers 43 miteinander verbunden. Schließlich kann eine Zentrierung und axiale Sicherung der Impuls-Trennkupplungsanordnung 1 am Kurbelwellenadapter 2a mittels der Fixierschraube 2.2 erfolgen, welche in ein Innengewinde des Kurbelwellenadapters 2a eingreift und an welcher die Auflagefläche 31a des Innenrings 31 zur Anlage kommt. Hierdurch kann eine Impuls-Trennkupplungsanordnung 1 bereitgestellt werden, die verbrennungsmotorseitig als eine in sich abgeschlossene Einheit und ohne weitere Montageschnittstellen innerhalb der Anordnung ausgeführt werden kann. Die Montage an die Kurbelwelle 2 kann auf einfache Weise mittels des Kurbelwellenadapters 2a in Verbindung mit der stirnseitigen formschlüssigen Schnittstelle 2a.1 sichergestellt werden. Hierbei muss lediglich eine zentrisch um die Symmetrieachse S angeordnete Fixierschraube 2.2 verschraubt werden. Die Fixierschraube 2.2 wird bevorzugt getriebeseitig G eingeschraubt, wie in Fig. 1 gezeigt.

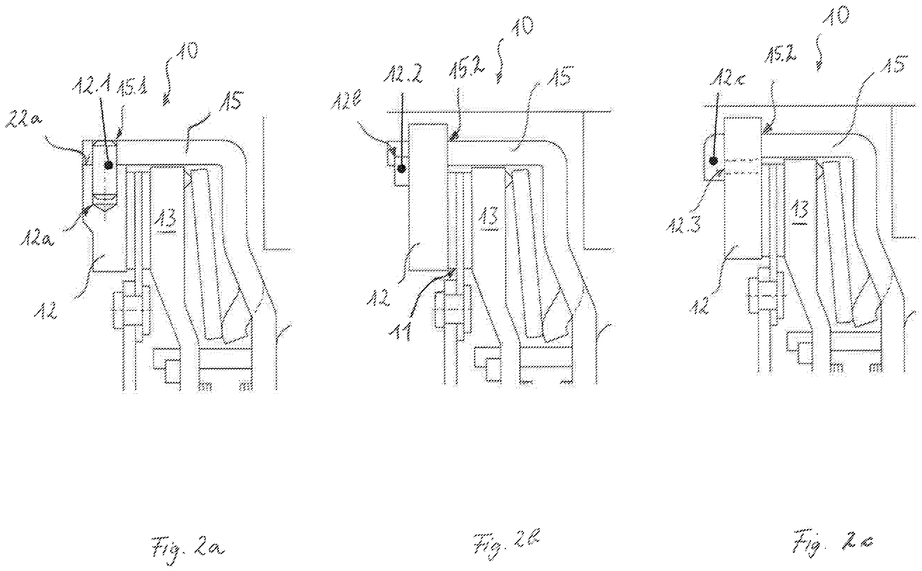

In der Figur 2a ist ein Teil einer Impuls-Trennkupplung 10 gezeigt, die außerhalb von einem Elektromotor angeordnet ist, wobei ein Deckel 15 der Impuls-Trennkupplung 10 mittels Stiften 12.1 mit einer Gegenplatte 12 der Impuls-Trennkupplung 10 drehfest und axialfest verbunden ist. Die Gegenplatte 12 ist mit einer Außenmantelfläche 22a an einer korrespondierenden Fläche des Deckels 15 im Deckel 15 zentriert. Der Deckel 15 umrahmt die Gegenplatte 12, und die Stifte 12.1 sind von radial außen durch entsprechende Aussparungen 15.1 (Bohrungen) im Deckel in radiale Bohrungen 12a der Gegenplatte 12 eingebracht.

Diese Art der Anbindung kann auf einfache, kostengünstige Weise verwirklicht werden. Die Stifte 12.1 können von radial außen ohne Einschränkung für den Monteur in den Deckel 15 und die Gegenplatte 12 getrieben werden. Die Gegenplatte 12 kann auf einfache Weise mit dem Deckel 15 verbunden werden, um die Impuls-Trennkupplung 10 ein einen fertig montierten Zustand zu bringen. Die Länge, der Anzahl und der Durchmesser der Stifte 12.1 kann weitgehend frei in Abhängigkeit der zu übertragenden Momente und Axialkräfte gewählt werden.

In der Figur 2b ist ein Teil einer Impuls-Trennkupplung 10 gezeigt, die außerhalb von einem Elektromotor angeordnet ist, wobei ein Deckel 15 der Impuls-Trennkupplung 10 mittels eines Sicherungsrings 12.2 mit einer Gegenplatte 12 der Impuls-Trennkupplung 10 verbunden ist. Der Deckel 15 weist eine Nut 12b auf, in welcher der Sicherungsring 12.2 in axialer Richtung gesichert ist. Die Gegenplatte 12 kommt in axialer Richtung innen (d.h. von der Seite der Kupplungsscheibe der Impuls-Trennkupplung 10) an dem Sicherungsring 12.2 zur Anlage. Die Gegenplatte 12 überlappt den Deckel 15 an einzelnen Umfangssegmenten in radialer Richtung und kann durch entsprechende Aussparungen 15.2 im Deckel 15 durch den Deckel 15 geführt und stabilisiert und verdrehsicher gelagert werden. Die Gegenplatte 12 weist hierzu eine entsprechende Geometrie der Außenmantelfläche auf, insbesondere eine Art Verzahnung.

Diese Art der Anbindung ermöglicht auf einfache Weise einen Austausch einer Kupplungsscheibe 11 der Impuls-Trennkupplung 10, z.B. wenn Reibbeläge der Kupplungsscheibe 11 abgenutzt sind. Der Sicherungsring 12.2 kann reversibel entfernt werden, und die Gegenplatte 12 kann axial aus dem Deckel 15 gezogen werden. Die Kupplungsscheibe 11 liegt dann frei und kann in axialer Richtung aus dem Deckel 15 entnommen werden.

In der Figur 2c ist ein Teil einer Impuls-Trennkupplung 10 gezeigt, die außerhalb von einem Elektromotor angeordnet ist, wobei ein Deckel 15 der Impuls-Trennkupplung 10 mittels einer Umwalzung 12c bzw. einem Rand in Verbindung mit Nieten 12.3 (in Fig. 2c ist eine bevorzugte Position von Nieten 12.3 lediglich durch die Strichlinie angedeutet) mit einer Gegenplatte 12 der Impuls-Trennkupplung 10 verbunden ist. Die Gegenplatte 12 überlappt den Deckel 15 an einzelnen Umfangssegmenten in radialer Richtung und kann durch entsprechende Aussparungen 15.2 im Deckel 15 durch den Deckel 15 geführt und stabilisiert und verdrehsicher gelagert werden. Die Gegenplatte 12 weist hierzu eine entsprechende Geometrie der Außenmantelfläche auf, insbesondere eine Art Verzahnung.

Durch die Umwalzung 12c bzw. den Rand kann eine besonders stabile Anlagefläche für die Gegenplatte 12 bereitgestellt werden. Der axiale Kraftfluss wird direkt in den Deckel 15 eingeleitet, und auch radiale Kräfte können durch die formschlüssige, verdrehsichere Verbindung, insbesondere durch eine Verzahnung an der Außenmantelfläche der Gegenplatte 12, auf direkte Weise übertragen werden.

### Bezugszeichenliste

- 1: Impuls-Trennkupplungsanordnung
- 2: Kurbelwelle
- 2a: Kurbelwellenadapter
- 2a.1: stirnseitige formschlüssige Schnittstelle, insbesondere stirnseitige Hirth-Verzahnung
- 2.1: Kurbelwellenschraube
- 2.2: Fixierschraube

- 10: Impuls-Trennkupplung
- 11: Kupplungsscheibe
- 11a: Träger für Kupplungsscheibe
- 11.1: Schraube
- 11.2: Unterlegscheibe
- 12: Gegenplatte
- 12.1: Stift
- 12a: radiale Bohrung
- 12.2: Sicherungsring
- 12b: Nut
- 12.3: Niet
- 12c: Umwalzung
- 13: Anpressplatte
- 13.1: Aussparung in Anpressplatte
- 14: Tellerfeder
- 15: Deckel
- 15a: Abstützung für Tellerfeder
- 15.1: Aussparung im Deckel
- 15.2: Aussparung im Deckel für Gegenplatte
- 16: Sicherungsring
- 17: Blattfeder
- 18: Ausrücklager
- 19a: Zuganker
- 19a.1: Rand
- 19b: Hebel oder Hebelfeder
- 20: Anfahrkupplung
- 21: Kupplungsscheibe
- 22: Gegenplatte
- 22a: Außenmantelfläche
- 23: Anpressplatte
- 24: Tellerfeder
- 25: Deckel
- 25a: Abstützung für Hebel oder Hebelfeder
- 25b: Drahtring
- 26: Sicherungsring
- 27: Blattfeder
- 28: Ausrücklager
- 29: Verbindungsniet
- 30: Stützlager
- 31: Innenring
- 31a: Auflagefläche für Fixierschraube
- 31b: stirnseitige formschlüssige Schnittstelle, insbesondere Hirth-Verzahnung
- 31c: Innenmantelfläche
- 32: Außenring
- 33: Lager, insbesondere Wälzlager
- 36: Sicherungsring

- 40: Elektromotor
- 41: Stator
- 42: Rotor
- 43: Rotorträger
- 43.1: Teil des Rotorträgers mit radialer Erstreckung
- 43a: Aussparung im Rotorträger

- G: Getriebeseite
- M: Motorseite
- S: Symmetrieachse

## Patentansprüche

1. Impuls-Trennkupplungsanordnung (1) für ein Hybridfahrzeug, die zwischen einem Verbrennungsmotor und einem Getriebe des Hybridfahrzeugs anordenbar ist, mit
einem Elektromotor (40);
einer Anfahrkupplung (20), die mit dem Getriebe verbindbar ist; und
einer eine Kupplungsscheibe (11) aufweisenden Impuls-Trennkupplung (10), die zum Kuppeln und Entkuppeln des Verbrennungsmotors von dem Elektromotor (40) eingerichtet ist;
**dadurch gekennzeichnet, dass**
die Kupplungsscheibe (11) verbrennungsmotorseitig (M) axial neben dem Elektromotor (40) angeordnet ist.

2. Impuls-Trennkupplungsanordnung (1) nach Anspruch 1, **dadurch gekennzeichnet, dass** die Kupplungsscheibe (11) der Impuls-Trennkupplung (10) radial überlappend zum Elektromotor (40) angeordnet ist.

3. Impuls-Trennkupplungsanordnung (1) nach Anspruch 1 oder 2, **dadurch gekennzeichnet, dass** die Impuls-Trennkupplungsanordnung (1) ein Stützlager (30) aufweist, wobei die Kupplungsscheibe (11) mittels des Stützlagers (30) drehfest mit einer Kurbelwelle (2) des Hybridfahrzeugs verbindbar ist.

4. Impuls-Trennkupplungsanordnung (1) nach Anspruch 3, **dadurch gekennzeichnet, dass** die Impuls-Trennkupplungsanordnung (1) einen Kurbelwellenadapter (2a) aufweist, welcher mit dem Stützlager (30) verbindbar ist.

5. Impuls-Trennkupplungsanordnung (1) nach Anspruch 3 oder 4, **dadurch gekennzeichnet, dass** das Stützlager (30) einen Innenring (31) aufweist, welcher einen Flansch mit einer stirnseitigen formschlüssigen Schnittstelle (31b) aufweist.

6. Impuls-Trennkupplungsanordnung (1) nach einem der vorhergehenden Ansprüche, **dadurch gekennzeichnet, dass** der Elektromotor (40) einen Rotorträger (43) aufweist, welcher die Anfahrkupplung (20) radial außen umgrenzt und dazu eingerichtet ist, die Anfahrkupplung (20) mit der Impuls-Trennkupplung (10) zu verbinden.

7. Impuls-Trennkupplungsanordnung (1) nach einem der vorhergehenden Ansprüche, **dadurch gekennzeichnet, dass** die Impuls-Trennkupplung (10) einen Zuganker (19a) aufweist, welcher sich axial innerhalb der Impuls-Trennkupplung (10) sowie innerhalb der Anfahrkupplung (20) erstreckt.

8. Impuls-Trennkupplungsanordnung (1) nach einem der vorhergehenden Ansprüche, **dadurch gekennzeichnet, dass** die Impuls-Trennkupplung (10) einen Deckel (15) aufweist, welcher verbrennungsmotorseitig (M) neben dem Elektromotor (40) mit einem Rotorträger (43) des Elektromotors (40) oder einer Gegenplatte (22) der Anfahrkupplung (20) verbunden ist.

9. Impuls-Trennkupplungsanordnung (1) nach Anspruch 8, **dadurch gekennzeichnet**, der Deckel (15) mit der Gegenplatte (22) der Anfahrkupplung (20) an einer Schnittstelle verbunden ist, die in einem Abstand zu einer Symmetrieachse (S) der Impuls-Trennkupplungsanordnung (1) angeordnet ist, der größer ist als ein Abstand eines Rotors (42) des Elektromotors (40) zur Symmetrieachse (S).

10. Verfahren zum Zusammenbauen einer Impuls-Trennkupplungsanordnung (1) für ein Hybridfahrzeug, mit den Schritten:
a) Einbauen einer Anfahrkupplung (20) der Impuls-Trennkupplungsanordnung (1) in einem innerhalb eines Elektromotors (40) der Impuls-Trennkupplungsanordnung (1) bereitgestellten Bauraumvolumen; und
b) Vormontieren der Impuls-Trennkupplungsanordnung (1),
**dadurch gekennzeichnet, dass**
das Vormontieren durchgeführt wird, indem eine Impuls-Trennkupplung (10) der Impuls-Trennkupplungsanordnung (1) verbrennungsmotorseitig (M) axial neben dem Elektromotor (40) angeordnet und mit dem Elektromotor (40) verbunden wird.

## Claims

1. Impulse separating clutch arrangement (1) for a hybrid vehicle, which impulse separating clutch arrangement (1) can be arranged between an internal combustion engine and a transmission of the hybrid vehicle, having
an electric motor (40);
a start-up clutch (20) which can be connected to the transmission; and
an impulse separating clutch (10) which has a clutch plate (11) and is set up to couple and decouple the internal combustion engine to/from the electric motor (40);
**characterized in that**
the clutch plate (11) is arranged axially next to the electric motor (40) on the internal combustion engine side (M).

2. Impulse separating clutch arrangement (1) according to Claim 1, **characterized in that** the clutch plate (11) of the impulse separating clutch (10) is arranged so as to overlap radially with respect to the electric motor (40).

3. Impulse separating clutch arrangement (1) according to Claim 1 or 2, **characterized in that** the impulse separating clutch arrangement (1) has a supporting bearing (30), it being possible for the clutch plate (11) to be connected fixedly to a crankshaft (2) of the hybrid vehicle so as to rotate with it by means of the supporting bearing (30).

4. Impulse separating clutch arrangement (1) according to Claim 3, **characterized in that** the impulse separating clutch arrangement (1) has a crankshaft adapter (2a) which can be connected to the supporting bearing (30).

5. Impulse separating clutch arrangement (1) according to Claim 3 or 4, **characterized in that** the supporting bearing (30) has an inner ring (31) which has a flange with an end-side positively locking interface (31b).

6. Impulse separating clutch arrangement (1) according to one of the preceding claims, **characterized in that** the electric motor (40) has a rotor carrier (43) which surrounds the start-up clutch (20) radially on the outside and is set up to connect the start-up clutch (20) to the impulse separating clutch (10).

7. Impulse separating clutch arrangement (1) according to one of the preceding claims, **characterized in that** the impulse separating clutch (10) has a tie rod (19a) which extends axially within the impulse separating clutch (10) and within the start-up clutch (20).

8. Impulse separating clutch arrangement (1) according to one of the preceding claims, **characterized in that** the impulse separating clutch (10) has a cover (15) which, next to the electric motor (40) on the internal combustion engine side (M), is connected to a rotor carrier (43) of the electric motor (40) or a counter-plate (22) of the start-up clutch (20).

9. Impulse separating clutch arrangement (1) according to Claim 8, **characterized in that** the cover (15) is connected to the counter-plate (22) of the start-up clutch (20) at an interface which is arranged at a spacing from an axis of symmetry (S) of the impulse separating clutch arrangement (1), which spacing is greater than a spacing of a rotor (42) of the electric motor (40) from the axis of symmetry (S).

10. Method for assembling an impulse separating clutch arrangement (1) for a hybrid vehicle, having the steps:
a) installation of a start-up clutch (20) of the impulse separating clutch arrangement (1) in an installation space volume which is provided within an electric motor (40) of the impulse separating clutch arrangement (1); and
b) pre-assembly of the impulse separating clutch arrangement (1),
**characterized in that**
the pre-assembly is carried out by an impulse separating clutch (10) of the impulse separating clutch arrangement (1) being arranged axially next to the electric motor (40) on the internal combustion engine side (M) and being connected to the electric motor (40).

## Revendications

1. Ensemble (1) d'embrayage de séparation à impulsions pour véhicule hybride, destiné à être placé entre un moteur à combustion interne et une transmission du véhicule hybride, l'ensemble présentant :
un moteur électrique (40),
un embrayage de démarrage (20) apte à être relié à la transmission et
un embrayage de séparation (10) à impulsions présentant un disque d'embrayage (11) conçu pour accoupler et désaccoupler le moteur à combustion interne et le moteur électrique (40),
**caractérisé en ce que**
le disque d'embrayage (11) est disposé axialement à côté du moteur électrique (40) du côté (M) du moteur à combustion interne.

2. Ensemble (1) d'embrayage de séparation à impulsions selon la revendication 1, **caractérisé en ce que** le disque d'embrayage (11) de l'embrayage $ est disposé de manière à se superposer radialement au moteur électrique (40).

3. Ensemble (1) d'embrayage de séparation à impulsions selon les revendications 1 ou 2, **caractérisé en ce que** l'ensemble (1) d'embrayage de séparation à impulsions présente un palier d'appui (30), le disque d'embrayage (11) pouvant être relié à rotation solidaire à l'arbre de vilebrequin (2) du véhicule hybride au moyen du palier de soutien (30).

4. Ensemble (1) d'embrayage de séparation à impulsions selon la revendication 3, **caractérisé en ce que** l'ensemble (1) d'embrayage de séparation à impulsions présente un adaptateur (2a) d'arbre de vilebrequin qui peut être raccordé au palier de soutien (30).

5. Ensemble (1) d'embrayage de séparation à impulsions selon les revendications 3 ou 4, **caractérisé en ce que** le palier de soutien (30) présente une bague intérieure (31) dotée d'une bride présentant une interface frontale (31b) en correspondance géométrique.

6. Ensemble (1) d'embrayage de séparation à impulsions selon l'une des revendications précédentes, **caractérisé en ce que** le moteur électrique (40) présente un porte-rotor (43) qui délimite l'embrayage de démarrage (20) radialement vers l'extérieur et qui est conçu pour relier l'embrayage de démarrage (20) à l'embrayage de séparation (10) à impulsions.

7. Ensemble (1) d'embrayage de séparation à impulsions selon l'une des revendications précédentes, **caractérisé en ce que** l'embrayage de séparation (10) à impulsions présente un induit de traction (19a) qui s'étend axialement à l'intérieur de l'embrayage de séparation (10) à impulsions ainsi qu'à l'intérieur de l'embrayage de démarrage (20).

8. Ensemble (1) d'embrayage de séparation à impulsions selon l'une des revendications précédentes, **caractérisé en ce que** l'embrayage de séparation (10) à impulsions présente un couvercle (15) relié du côté (M) du moteur à combustion interne, en plus du moteur électrique (40), à un porte-rotor (43) du moteur électrique (40) ou à une plaque complémentaire (22) de l'embrayage de démarrage (20).

9. Ensemble (1) d'embrayage de séparation à impulsions selon la revendication 8, **caractérisé en ce que** le couvercle (15) est relié à la plaque complémentaire (22) de l'embrayage de démarrage (20) en une interface disposée à une distance d'un axe de symétrie (S) de l'ensemble (1) d'embrayage de séparation à impulsions supérieure à la distance entre le rotor (42) du moteur électrique (40) et l'axe de symétrie (S).

10. Procédé s'assemblage d'un ensemble (1) d'embrayage de séparation à impulsions pour véhicule hybride, le procédé comportant les étapes qui consistent à :
a) monter un embrayage de démarrage (20) de l'ensemble (1) d'embrayage de séparation à impulsions dans un volume de montage prévu à l'intérieur du moteur électrique (40) de l'ensemble (1) d'embrayage de séparation à impulsions et
b) pré-monter l'ensemble (1) d'embrayage de séparation à impulsions,
**caractérisé en ce que**
le pré-montage est réalisé en disposant un embrayage de séparation à impulsions de l'ensemble (1) d'embrayage de séparation à impulsions du côté (M) du moteur à combustion interne, axialement à côté du moteur électrique (40), et en le reliant au moteur électrique (40).
